# EUROPEAN PATENT SPECIFICATION

(11) **EP 0 938 600 B1**
(45) Date of publication and mention of the grant of the patent: **06.12.2006**
(21) Application number: 98920647.9
(22) Date of filing: 07.05.1998
(51) Int. Cl.: D01D 5/098, D01F 6/02, A61C 15/04

(54) **Dental floss**
Zahnseide
Fil de soie dentaire

(30) Priority: 07.05.1997 GB 9709108; 22.08.1997 GB 9717727; 25.09.1997 GB 9720354
(43) Date of publication of application: 01.09.1999
(73) Proprietor: Peri-dent Limited, Galashiels, Selkirkshire TD1 3RS, Scotland (GB)
(72) Inventor: HILL, David, Mackenzie Peri-dent Limited, Selkirkshire TD1 3RS (GB); ROBERTS, Ian, Tweedbank Galashiels Selkirkshire TD13RS (GB)
(74) Representative: Lock, Howard John
(86) International application number: PCT/GB1998/001320
(87) International publication number: WO 1998/050607

(56) References cited:
- EP-A- 0 339 935
- GB-A- 2 128 133
- GB-A- 2 258 402
- US-A- 3 800 812

## Description

The present invention concerns an improved method for making dental floss, especially but not exclusively, a method of manufacturing dental floss from polypropylene or polyethylene or a blend of these materials, known for instance, from GB-A-2258402

Polytetrafluoroethylene (PTFE) has been recognised as a material which, in yarn form, gives satisfactory results in certain specialist applications, for example, dental floss or tape. PTFE is a relatively costly material and there is a desire to provide a yarn exhibiting the same overall characteristics as PTFE but being formed from a less expensive material.

Specification No. EP-A-0339 935 discloses a multi-filament dental floss and a method for making such a floss.

According to one aspect of this invention there is provided a method of converting a plastics material into a dental floss, said plastics material comprising polyethylene or polypropylene, a blend of polyethylene and polypropylene or a copolymer of ethylene and propylene, the method comprising heating the plastics material to melt it, forming a filament, and thereafter cooling the filament, characterised in that the step of forming the filament comprises passing the molten material through an extrusion die (114) to form an extruded filament (116), wherein the dental floss constitutes the filament and the filament has a width in a range of 0.5mm to 4mm and a decitex in the range of 500 to 1500.

According to another aspect of the present invention there is provided a method of converting a plastics material into a dental floss, said plastics material comprising polyethylene or polypropylene, a blend of polyethylene and polypropylene or a copolymer of ethylene and propylene, the method comprising heating the material to melt it, forming a filament, cooling the filament, passing the filament through a first draw roller assembly (122) while elevating the temperature of the filament (116), heating the filament (116) in a heating zone (124) as it exits from the first draw roller assembly (122) and, thereafter, passing the filament (116) through a second draw roller assembly (134) operating at a different linear speed to the first draw roller assembly (122) and spooling the filament (116) exiting the second draw roller assembly, characterised in that the step of forming the filament (116) comprises pumping the molten plastics material through an extrusion die (114) to form an extruded filament, wherein the dental floss constitutes the filament (116), and the filament has a width in the range of 0.6 to 1.5mm, and a decitex in the range of 500 to 1500.

Where the plastics material is a co-polymer of ethylene and propylene, the material may comprise from 0 to 60% wt/wt of said co-polymer, preferably from 0 to 40% of said co-polymer.

The material may further include polytetrafluoroethylene (PTFE), for example in an amount of 5 to 10% wt/wt.

The material may comprise a rubberising product comprising a propylene polymer with ethene. For example, a product sold under the trade mark ADFLEX can be used. Alternatively, any other similar such product can be used. The material may comprise from 0 to 100% wt/wt of said product, preferably from 0 to 60% wt/wt, more preferably, from 0 to 40% wt/wt. The use of the rubberising product has the effect of rendering to the yarn a more rubbery texture. This can be advantageous when the yarn is to be used as a dental floss.

The material may include an ethylene vinyl acetate polymer, which may be a co-polymer, the co-polymer including a vinyl acetate, preferably at 7 to 18% wt/wt. An example of a suitable such co-polymer is sold under the trade mark EVATANE by Elf Atochem UK Ltd.

The material may include from 0 to 60% wt/wt of said ethylene vinyl acetate polymer, preferably 0 to 40% wt/wt.

Silica may be added to the plastics material. Preferably, the silica is added in the form of particles. Preferably, silica is added to the material in an amount of 1% to 5% wt/wt. The silica may be added to the material prior to or during heating thereof. The silica may be a coloured silica.

A silicone may be added to the material. The silicone may be linear polydimethyl silicone, suitably one sold by Dow Corning under the designation MB50-001 SILICONE MASTERBATCH. The silicone may be added in an amount 1 - 50% wt/wt, preferably 5 - 20% wt/wt, more preferably 10 - 15% wt/wt.

In the first embodiment, the rollers in the first heated draw roller assembly are rotating such as to impart to the filament a speed which may lie within the range 0-200m per minute, preferably within the range 5 to 40m per minute. More preferably it is 20m per minute.

The temperature of the rollers in the first heated draw roller assembly of the first embodiment may lie within the range 0 - 200°C, preferably within the range 80 to 160°C. More preferably it is 95°C. The temperature in the heating zone at the exit from the first draw roller assembly may lie within the range 0 - 200°C, preferably within the range 80 to 140°C. More preferably it is 120°C.

Preferably the second draw roller assembly operates at a higher speed than the first draw roller assembly. In a first embodiment of the invention the second draw roller assembly is heated.

The temperature of the rollers in the second heated draw roller assembly of the first embodiment may lie within the range 0 - 200°C, preferably within the range 80 to 140°C. More preferably it is 90°C.

The rollers of the second heated draw roller assembly of the first embodiment are rotating such as to impart to the filament a speed which may lie within the range 0 - 1000m per minute, preferably within the range 50 to 250m per minute. More preferably it is 80m per minute.

In a second embodiment, the filament may be passed through an intermediate draw roller assembly arranged downstream of the first draw roller assembly and upstream of the second draw roller assembly.

In the second embodiment the extruded filament may be further heated in a second heating zone as the filament exits the intermediate draw roller assembly. Conveniently, the filament is substantially not heated as it passes through the intermediate draw roller assembly.

In the second embodiment, the rollers in the first draw roller assembly are rotating such/as to impart to the filament a speed which may lie within the range of 16 - 50m per minute, conveniently substantially 32m per minute.

Preferably, the first draw roller assembly of the second embodiment comprises a plurality of rollers, conveniently five. The temperature of at least one of the rollers in the first draw roller assembly of the second embodiment may lie in the range of 50 - 100°C, conveniently 96 - 100°C. Conveniently the roller of the first draw roller assembly arranged furthest downstream thereof is heated. Preferably, the roller immediately upstream of said furthest downstream roller is also heated.

The temperature of the first mentioned heating zone at the exit from the first draw roller assembly of the second embodiment may lie in the range of 100 - 135°C, conveniently 116 - 177°C.

The temperature of the second heating zone at the exit from the intermediate draw roller assembly may lie in the range of 100 - 150°C. conveniently substantially 150°C.

The intermediate draw roller assembly may comprise a plurality of rollers, conveniently five. The rollers in the intermediate draw roller assembly are rotating such as to impart to the filament a speed which may lie in the range 150 - 250m per minute, conveniently substantially 175m per minute.

The second draw roller assembly in the second embodiment may comprise a plurality of rollers, conveniently five. The rollers in the second draw roller assembly are rotating such as to impart to the filament a speed which may lie in the range 100 - 250m per minute, conveniently substantially 160m per minute, for example 158m per minute.

The extruded filament may be cooled as it passes through the second draw roller assembly of the second embodiment. At least one of the rollers of the second draw roller assembly is at a temperature in the range 5 - 15°C, conveniently 11 = 12°C. Conveniently, the roller of the second draw roller assembly arranged furthest downstream thereof is cooled. Preferably, the roller immediately upstream of said furthest downstream roller is also cooled.

In one embodiment, flattering means is provided to flatten the filament. The flattening means may comprise at least one roller, and preferably a pair of flattening rollers between which the filament can pass. The flattening rollers are conveniently arranged to impart to the filament a thickness in the region of substantially 0.05 - 0.075mm. Prior to passing through the flattening means the filament may have a thickness of substantially 0.095mm.

Preferably, the flattening means acts to bilaterally orient the molecules in the filament, thereby providing improved lateral strength.

Preferably the filament is extruded in a generally downward direction from the extruder.

Preferably the extruded filament is cooled in a water bath. Preferably the temperature of the water in the bath is controlled.

Preferably the height of the water bath is adjustable to regulate the cross-section of the extruded filament.

Preferably the filament, as it leaves the extruder, takes the form of the extruding die which is generally rectangular in shape having radiused corners.

Preferably the dimensions of the extruder die are 12mm x 0.5mm.

Preferably the granules are formed from polypropylene of a type known as 66/34LD. The flow rate of melted granules through the extruder may lie within the range 2-12 g per min.

The temperature of the melted granules may lie in the range 200-300°C, preferably within the range 250 to 290°C.

Preferably the extruder pressure lies within the range 600-1400psi. Preferably it is 1000psi. Preferably the speed of the metering pump feeding the molten granules to the extrusion die is 1-18 revs per minute, preferably 2 to 8 revs per minute. More preferably it is 6 revs per minute.

The water temperature within the cooling bath may be 5-50°C, preferably 10 to 40°C. More preferably it is 35°C.

The distance between the exit from the extrusion die and the water level in the cooling bath may lie within the range 2-40mm, preferably 2 to 15 mm. More preferably it is 5mm.

When a dental floss has to be formed, the distance between the extrusion die and the water level may lie within the range 2 to 15mm. More preferably it is 5mm. The depth of the water within the cooling bath may lie within the range 0.1 to 50cm, preferably within the range 10 to 20cm. More preferably it is 15cm.

The speed of the spooling assembly may lie within the range 0-1000m per minute, preferably within the range 50 to 250m per minute. More preferably it is 80m per minute.

A plastics material yarn may be manufactured by a method comprising heating to a temperature within the range 200 - 300°C granules of a plastics material, preferably polypropylene plastics material, causing the melted granules to flow to an extrusion metering pump at a rate lying within the range 2 - 12g per min, passing the melted material through the extrusion metering pump operating it at a speed within the range 1 - 18 revs per minute to create an extrusion pressure lying within the range 600 - 1400psi, extruding the material through a die and guiding the extruded filament into a bath located between 2 and 40mm below the exit from the extruder die and containing a cooling fluid, for example water, at a temperature lying within the range 5 - 50°C, passing extruded filament from the water bath to a first heated draw roller assembly where the rollers are heated to a temperature of between 0 - 200°C and pass filament therethrough at a speed lying within the range 0-200m per minute, heating the filament exiting from the first draw roller assembly in a heating zone to a temperature lying within the range 0 - 200°C passing the material through a second heated draw roller assembly where the rollers are heated to a temperature of between 0 - 200°C and passing the yarn therethrough at a speed of between 0 - 1000m per minute and spooling filament exiting from the second heated draw roller assembly at a speed of between 0 - 1000m per minute.

A plastics material yarn may be manufactured by a method comprising heating to a temperature within the range of 200 - 300°C granules of a plastics material, preferably polypropylene plastics material, causing the melted granules to flow to an extrusion metering pump, passing the melted material through the pump and extruding the material through a die into a bath located between 2 and 40mm below the exit of the extruder die and containing a cooling fluid, for example water at a temperature lying within the range of 5 - 50°C, passing the extruded filament from the bath to a first heated draw roller assembly where at least one of the rollers are heated to a temperature lying in the range of 50 - 100°C, and passing the filament therethrough at a speed lying within the range of 16 - 50m per minute, heating the filament exiting from the first draw roller assembly in a first heating zone to a temperature lying in the range of 100 - 135°C, passing the filament through an intermediate draw roller assembly at a speed lying within the range of 150 - 250m per minute, heating the filament exiting from the intermediate draw roller assembly in a second heating zone to a temperature lying in the range of 100 - 150°C, passing the filament through a second draw roller assembly where at least one of the rollers is cooled to a temperature lying in the range of 5 - 50°C, and spooling the filament exiting from the second draw roller assembly.

The plastics material yarn has a width in the range of 0.5 - 4mm, and a decitex in the range of 500 - 1500.

Preferably, the tensile strength of the yarn is in the range of 12 - 30N, more preferably 15 - 25N. The width of the yarn may be in the range of 0.6 to 1.5mm. Suitably, the width is 0.6mm, 1.1mm or 1.5mm. The decitex of the yarn may be in the range of 550 - 1000.

Preferably, the yarn comprises a polymeric plastics material, suitably one or more polyalkenes formed from one or more of C₂ - C₃ alkenes. Suitably, the plastics material is polyethylene or polypropylene, a blend of polyethylene or polypropylene, or a co-polymer of ethylene and propylene.

Where the plastics material is a co-polymer of ethylene and propylene, the material may comprise from 0 to 100% of said co-polymer, preferably from 0 to 60%, and more preferably from 0 to 40% of said co-polymer.

The material may include PTFE, for example in an amount of 5 to 10% wt/wt.

The material may comprise a product comprising a propylene polymer with ethene. For example, a product sold under the trade mark ADFLEX can be used. Alternatively, any other similar such product can be used. The material may comprise from 0 to 100% wt/wt of said product, preferably from 0 to 60% wt/wt, more preferably from 0 to 40% wt/wt.

The material may include an ethyl vinyl acetate polymer, which may be a co-polymer, the co-polymer including a vinyl acetate, preferably at 7 to 18% wt/wt. An example of a suitable such co-polyrrler is sold under the trade mark EVATANE.

The material may include from 0 to 60% wt/wt of said ethylene vinyl acetate, preferably 0 to 40% wt/wt.

The material may include silica, which may be in the form of particles. Preferably, the silica comprises 1 to 5% wt/wt of the material. The silica may be a coloured silica.

The material may include a colouring, for example Titanium dioxides The material may include from 0 to 5% wt/wt of said colouring, preferably substantially 1% wt/wt.

Apparatus may be provided for converting a plastics material into a yarn, the apparatus comprising means for melting the material, means for pumping melted material through an extrusion die to form an extruded filament, means for cooling the extruded filament, a first draw roller assembly to draw the extruded filament therethrough, heating means to heat at least one of the rollers of said first draw roller assembly, a heating zone arranged at the exit of the first draw roller assembly to heat the extruded filament exiting from said first draw roller assembly, a second draw roller assembly operating at a different linear speed to the first draw roller assembly, and spooling means for spooling the filament exiting from the second draw roller assembly.

In a first version, the rollers in the first heated draw roller assembly may be rotating such as to impart to the filament a speed which may lie within the range 0 - 200m per minute, preferably within the range 5 to 40m per minute. More preferably it is 20m per minute.

The temperature of the rollers in the first heated draw roller assembly of the first version may lie within the range 0-200°C, preferably within the range 80 to 160°C. More preferably it is 95°C. The temperature in the heating zone at the exit from the first draw roller assembly may lie within the range 0 - 200°C, preferably within the range 80 to 140°C. More preferably it is 120°C.

Preferably the second draw roller assembly operates at a higher speed than the first draw roller assembly. In the first embodiment of the invention the second draw roller assembly may be heated.

The temperature of the rollers in the second heated draw roller assembly of the first version may he within the range 0 - 200°C, preferably within the range 80 to 140°C. More preferably it is 90°C.

The rollers of the second heated draw roller assembly of the first version are rotating such as to impart to the filament a speed which may lie within the range 0 - 1000m per minute, preferably within the range 50 to 250m per minute. More preferably it is 80m per minute.

In a second version, the apparatus may include an intermediate draw roller assembly arranged downstream of the first draw roller assembly and upstream of the second draw roller assembly.

In the second version, the apparatus may include a second heating zone to heat the filament, the second heating zone being arranged at the exit of the intermediate draw roller assembly. Conveniently, intermediate draw roller assembly is not heated.

In the second version, the rollers in the first draw roller assembly are rotating such as to impart to the filament a speed which may lie within the range of 16 - 50m per minute, conveniently substantially 32m per minute.

Preferably, the first draw roller assembly of the second version comprises a plurality of rollers, conveniently five. The temperature of at least one of the rollers in the first draw roller assembly of the second version may lie in the range of 50 - 100°C, conveniently 96 - 100°C. Conveniently the roller of the first draw roller assembly arranged furthest downstream thereof is heated. Preferably, the roller immediately upstream of said furthest downstream roller is also heated.

The temperature of the first mentioned heating zone at the exit from the first draw roller assembly of the second version may lie in the range of 100 - 135°C, conveniently 116 - 177°C.

The temperature of the second heating zone at the exit from the intermediate draw roller assembly may lie in the range of 100 - 150°C, conveniently substantially 150°C.

The intermediate draw roller assembly may comprise a plurality of rollers, conveniently five. The rollers in the intermediate draw roller assembly are rotating such as to impart to the filament a speed which may lie in the range 150 - 250m per minute; conveniently substantially 175m per minute.

The second draw roller assembly in the second version may comprise a plurality of rollers, conveniently five. The rollers in the second draw roller assembly are rotating such as to impart to the filament a speed which may lie in the range 100 - 2 50m per minute, conveniently substantially 160m per minute, for example 158m per minute.

The second draw roller assembly of the second version may be cooled. At least one of the rollers of the second draw roller assembly is at a temperature in the range 5 - 15°C, conveniently 11 - 12°C. Conveniently, the roller of the second draw roller assembly arranged furthest downstream thereof is cooled. Preferably, the roller immediately upstream of said furthest downstream roller is also cooled.

In one version, flattening means is provided to flatten the filament. Preferably, the flattening means comprises at least one roller, and preferably a pair of flattening rollers between which the filament can pass. The flattening rollers are conveniently arranged to impart to the filament a thickness in the region of substantially 0.05 to substantially 0.075mm. Prior to passing through the flattening means the filament may have a thickness of 0.095mm.

Preferably, the flattening means acts to bilaterally orient the molecules in the filament, thereby providing improved lateral strength.

Preferably the filament is extruded in a generally downward direction from the extruder.

Preferably the cooling means is a water bath. Preferably the temperature of the water in the bath is controlled.

Preferably the height of the water bath is adjustable to regulate the cross-section of the extruded filament.

The flow rate of melted granules through the extruder may lie within the range 2 - 12g per min.

The melting means may be adapted to heat the material to a temperature in the range 200 - 300°C, preferably within the range 250 to 290°C.

Preferably the extruder pressure lies within the range 600 - 1400psi. Preferably it is 1000psi. Preferably the speed of the metering pump feeding the molten granules to the extrusion die is 1 - 18 revs per minute, preferably 2 to 8 revs per minute. More preferably it is 6 revs per minute.

The water temperature within the cooling bath may be 5 - 50°C, preferably 10 to 40°C. More preferably it is 35°C.

The distance between the exit from the extrusion die and the water level in the cooling bath may lie within the range 2 - 40mm, preferably 2 to 15mm. More preferably it is 5mm.

When a dental floss has to be formed, the distance between the extrusion die and the water level may lie within the range 2 to 15mm. More preferably it is 5mm. The depth of the water within the cooling bath may lie within the range 0.1 to 50cm, preferably within the range 10 to 20cm. More preferably it is 15cm.

The speed of the spooling assembly may lie within the range 0 - 1000m per minute, preferably within the range 50 to 250m per minute. More preferably it is 80m per minute.

Embodiments will now be described by way of example only with reference to the accompanying drawings in which:-
Fig. 1 shows diagrammatically an apparatus for manufacturing plastics material yarn;
Fig. 2 shows diagrammatically a further apparatus for manufacturing plastics material yarn; and
Fig. 3 shows diagrammatically another apparatus for manufacturing plastics material yarn.

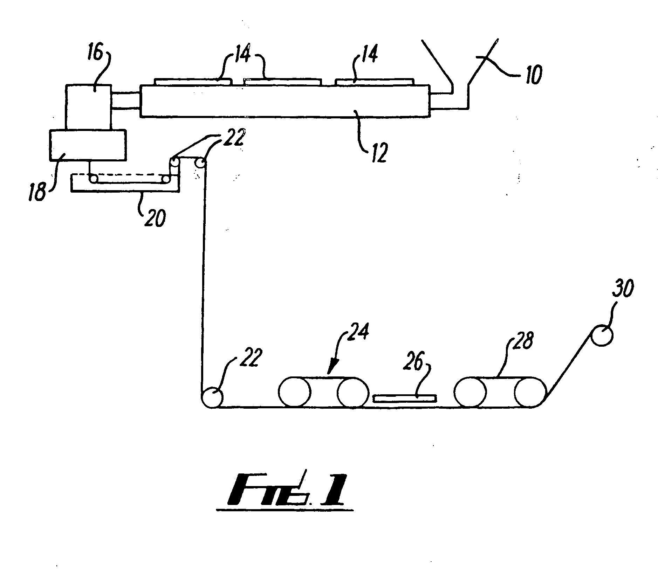

Referring to Fig. 1. there is shown a first version of apparatus for manufacturing plastics material yarn, for example a dental floss or tape. The apparatus comprises a hopper 10 to which polypropylene granules of the type known as 66/34LD are supplied. Alternatively, a co-polymer of ethylene and propylene can be supplied to the hopper 10, or a blend of polyethylene and polypropylene.

Further ingredients can also be added at this stage to form a mixture. One of these further ingredients is polytetrafluoroethylene, which can be added in the form of granules, in an amount of 5 to 10% of the final mixture. A further component is an ethylene vinyl acetate polymer, which can suitably be an ethylene vinyl acetate/vinyl acetate co-polymer, containing 7 to 18% vinyl acetate. The ethylene vinyl acetate polymer or co-polymer can be added in the form of granules in an amount of 0 to 40% of the final mixture. A suitable such co-polymer is sold under the trade mark EVATANE by Elf Atochem UK Ltd.

A rubberising product or agent can be added, which can be a propylene polymer with ethylene. A suitable such ingredient is sold under the trade mark ADFLEX by Montell polyolefins. This product is added to improve the flexibility of the yarn. Preferably, the product is added in an amount of 0 to 40% wt/wt.

Silica particles can be added to the hopper 10 with the other ingredients. The silica can be added in an amount of 1 to 5% wt/wt. The silica can be coloured to provide the yarn with a mottled appearance. The silica has the effect, when the yarn is used as a dental floss or tape, of an abrasive to enhance the cleaning of the teeth.

A silicone may also be added. A suitable such silicone is one manufactured by Dow Corning under the designation MB50-001 SIMCONE MASTERBATCH. The silicone may be added in an amount of 5 - 20% wt/wt. The silicone is provided in the form of pellets or granules.

The granules or the mixture are drawn into an extruder barrel 12 provided with heaters 14 and melted material from the extruder barrel 12 passes through a metering pump 16 feeding a diehead 18, the diehead providing an extrusion aperture of generally rectangular form having radius corners, the aperture being 8 x 0.06mm with the axis of the extrusion aperture being in a generally vertical direction so that extruded filament leaves the die travelling in a downward direction.

The extruded filament is received in a water-filled cooling bath 20 and after passing therethrough it is guided by guide-rollers 22 into first heated draw roller assembly where the filament is heated and subjected to tension to extend it. Filament exiting from the first draw roller assembly 24 is re-heated under a hotplate 26 before passing into a second heated draw roller assembly where it is subjected to further tension and heat, the finally treated material being spooled on a spooling assembly 30.

With a propylene starting material known as 66/34LD the apparatus described above is operated under the following range of conditions:

| | |
|---|---|
| Resin Melt flow: | 2 - 12g per minute |
| Melt Temp: | 200 - 300°C. |
| Extrusion Pressure: | 600 - 1400psi |
| Metering Pump Speed: | 1-18 revs per minute |
| Water Bath - Temp: | 5 - 50°C. |
| Die Height Above Water Level: | 2 - 40mm |
| Water Depth: | 0.1 - 50cm |
| Roller 1 Speed: | 0 - 200 metres per minute |
| Roller 1 Temp: | 0 - 200°C. |
| Hot Plate: | 0 - 200°C. |
| Roller 2 Speed: | 0 - 1000 metres per minute |
| Roller 2 Temp: | 0 - 200°C. |
| Take Up Speed: | 0 - 1000 metres per minute |

In one specific example the apparatus is operated under the following conditions.

| | |
|---|---|
| Resin Melt flow: | MDI = 3.2 |
| Melt Temp: | 270°C |
| Extrusion Pressure: | 1000psi |
| Metering Pump Speed: | 6 revs per minute |
| Water Bath - Temp: | 35°C |
| Die Height Above Water Level: | 5mm |
| Water Depth: | 15cm |
| Roller 1 Speed: | 20 metres per minute |
| Roller 1 Temp: | 95°C |
| Hot Plate: | 120°C |
| Roller 2 Speed: | 80 metres per minute |
| Roller 2 Temp: | 90°C |
| Take Up Speed: | 80 metres per minute (1% above roller 2 speed) |

The examples described above provide a polypropylene yarn in tape form which is suitable, if necessary after further treatment, for example, coating with wax with additives therein into a dental interproximal cleaning tape.

If a dental floss is required the same apparatus can be used but the water bath is lowered to a distance of between 4 and 8mm from the exit from the extruder.

In a further modification polypropylene can be substituted with polyethylene the operating conditions lie within the following range.

| | |
|---|---|
| Resin Melt flow: | MFI 3.2 |
| Melt Temp: | 270°C |
| Extrusion Pressure: | 1000psi |
| Metering Pump Speed: | 3 revs per minute |
| Water Bath - Temp: | 35°C |

| | |
|---|---|
| Die Height Above | |
| Water Level: | 5mm |
| Water Depth: | 15cm |
| Roller 1 Speed: | 20 metres per minute |
| Roller 1 Temp: | 95°C |
| Hot Plate: | 120°C |
| Roller 2 Speed: | 80 metres per minute |
| Roller 2 Temp: | 90°C |
| Take Up Speed: | 80 metres per minute |

In a still further modification a mixture of polypropylene and polyethylene may be employed.

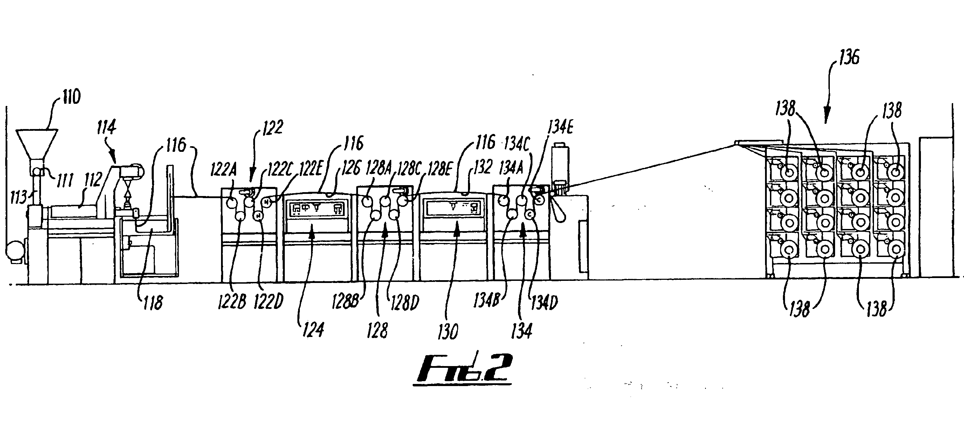

Referring to Fig. 2 there is shown a second version of apparatus for manufacturing plastics material yarn, for example a dental floss. The apparatus 10 comprises one or more feed hoppers 110 to feed one or more ingredients to a screw mixing barrel 112. The ingredients are suitably the same as those described for the first embodiment. If desired a white colouring material e.g. TiO₂ can be added in an amount of about 1% wt/wt. A separate hopper 110 is provided for each of the ingredients and the, or each, hopper 110 is provided with a screw feed 111 to feed a predetermined amount of the ingredient to the mixing barrel in at a predetermined rate. Between the hopper(s) 110 and the mixing barrel there is provided a vertical tube 113 known in the art to control the rate of feed of the material to the mixing barrel 12.

The mixing barrel 112 is heated to melt the material therein and the molten material is compressed in the barrel 112. The temperature inside the mixing barrel 112 is at about 250°C. A pump and die head assembly 114 is provided at the exit of the barrel 112 to pump the molten material through dies of appropriate shape to form a plurality of extruded filaments 116.

The filaments 116 are extruded downwardly into a cooling water bath 118 at a temperature of about 12°C to cool the extruded filaments. The distance between the downwardly facing die apertures and the surface of the water bath determines the width of filament passing through the bath 118.

The filaments 116 then pass over a plurality of guide rollers 120 to a first draw roller assembly 122 comprising five rollers 122A, B, C, D and E. The roller 122E which is furthest downstream of the rollers of the first draw roller assembly 122, and the roller 122D immediately upstream of the roller 122E, are heated to a temperature of about 96 - 100°C. The rollers of the first draw roller assembly 122 are rotating such as to impart to the filaments 116 a speed of about 32m per minute, (for example 32.2m per minute).

A first heating zone 124 is arranged adjacent, and downstream, of the first draw roller assembly 122. The first heating zone 124 comprises an upwardly convex heating plate 126 across which the filaments 116 pass. The heating plate 126 of the first heating zone 124 is heated to a temperature of about 116 - 117°C.

Downstream of the first heating zone is an intermediate draw roller assembly 128 comprising five rollers 128A, B, C, D and E. The rollers of the intermediate draw roller assembly 128 are rotating such as to impart to the filaments 116 a speed of about 175m per minute. This difference in speed between the rollers of the first draw roller assembly 122 and the rollers of the intermediate draw roller assembly 128 causes the filament 116 to stretch and consequently effects a reduction in the width of the filament 116. None of the rollers 128A to E are heated or cooled.

A second heating zone 130 is arranged adjacent, and downstream of the intermediate draw roller assembly 128. The second heating zone 130 comprises an upwardly convex heating plate 132 across which the filaments 116 pass. The heating plate 132 is heated to a temperature of about 150°C.

A second draw roller assembly 134 is provided downstream of the second heating zone 130 and adjacent thereto. The second draw roller assembly 134 comprises five rollers 134A to 134E. The roller 134E which is furthest downstream of the rollers of the second draw roller assembly 134, and the roller 134D immediately upstream of the roller 134E, are cooled to a temperature of about 11 - 12°C. The rollers of the second draw roller assembly 134 are rotating such as to impart to the filaments 116 a speed of about 158m per minute. The difference in speed between the rollers of the second draw roller assembly 134 and the intermediate draw roller assembly 128 and the passage of the filaments 116 across the heating zone 130 results in the relaxation of the filaments 116 to ensure there is no tension therein.

The cooling of the filaments 116 by the rollers 134D and E results in filaments that can be handled and spooled for storage.

After the second draw roller assembly 134, the filaments 116 pass to spooling means 136, known in the art at which each filament 116 are spooled into a respective individual bobbin 138 for storage.

With a polypropylene stating material 66/34LD at 59 - 60% wt/wt, ADFLEX at 39 - 40% wt/wt and TiO₂ colourant at 1% wt/wt the apparatus described above results in a yarn having the following properties.

| | |
|---|---|
| Width: | 0.6mm, 1.1mm or 1.5mm (depending upon the distance from the die head to the water bath) |
| Decitex: | 550 - 1000 |
| Tensile Strength: | 15 - 25N |

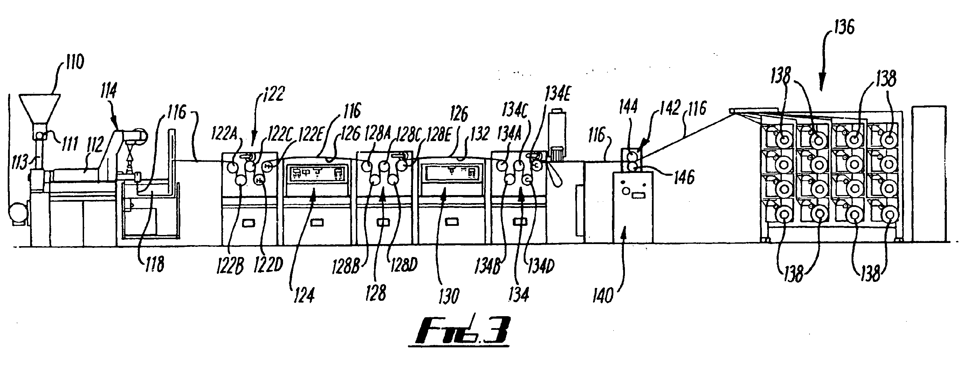

Referring to Fig. 3, there is shown a third version of the apparatus which comprises all the features of the apparatus shown in Fig. 2 and these have been designated with the same reference numerals.

In addition, the apparatus shown in Fig. 3 also includes flattening means 140 comprising a pair 142 of opposed rollers 144, 146, between which the filaments 116 passes. The surfaces of the rollers 144, 146 are spaced from each other at the point at which the filaments 116 passes therebetween by a distance sufficient to flatten the filaments 116 from a thickness of substantially 0.095mm, to a thickness of between substantially 0.05mm and substantially 0.075mm.

The flattening of the filaments 116 by the flattening means 140 bilaterally orient the molecules in the filaments 116 thereby increasing the lateral strength of the filaments 116.

It will be realised that the operating conditions, extrusion dimensions etc. for all the embodiments can be amended to form polypropylene/polyethylene flosses, the characteristics of which approximate to those of equivalent PTFE products.

## Claims

1. A method of converting a plastics material into a dental floss, said plastics material comprising polyethylene or polypropylene, a blend of polyethylene and polypropylene or a copolymer of ethylene and propylene, the method comprising heating the plastics material to melt it, forming a filament, and thereafter cooling the filament, **characterised in that** the step of forming the filament comprises passing the molten material through an extrusion die (114) to form an extruded filament (116), wherein the dental floss constitutes the filament and the filament has a width in a range of 0.5mm to 4mm and a decitex in the range of 500 to 1500.

2. A method according to claim 1 comprising passing the extruded filament (116) through a draw roller assembly (122) while elevating the temperature of the filament (116).

3. A method according to claim 2 wherein the filament is heated after exiting from the draw roller assembly (122).

4. A method according to claim 1 comprising passing the extruded filament (116) through a plurality of draw roller assemblies (122, 128, 134) whereby the temperature of the filament (116) is elevated at at least one of the assemblies.

5. A method according to claim 4 wherein the filament (116) is heated after exiting from at least one of the draw roller assemblies.

6. A method of converting a plastics material into a dental floss, said plastics material comprising polyethylene or polypropylene, a blend of polyethylene and polypropylene or a copolymer of ethylene and propylene, the method comprising heating the material to melt it, forming a filament,cooling the filament, passing the filament through a first draw roller assembly (122) while elevating the temperature of the filament (116), heating the filament (116) in a heating zone (124) as it exits from the first draw roller assembly (122) and, thereafter, passing the filament (116) through a second draw roller assembly (134) operating at a different linear speed to the first draw roller assembly (122) and spooling the filament (116) exiting the second draw roller assembly, **characterised in that** the step of forming the filament (116) comprises pumping the molten plastics material through an extrusion die (114) to form an extruded filament, wherein the dental floss constitutes the filament (116), and the filament has a width in the range of 0.6 to 1.5mm, and a decitex in the range of 500 to 1500.

7. A method according to claim 6 wherein where the plastics material includes a copolymer of ethylene and propylene, and the material comprises from 0 to 100% wt/wt of said co-polymer, preferably from 0 to 60%, and more preferably from 0 to 40% of said co-polymer.

8. A method according to claim 6 or 7 wherein the material includes PTFE in an amount of 5 to 10% wt/wt.

9. A method according to any of claims 6 to 8 wherein the material comprises a rubberising product comprising a propylene polymer with ethene.

10. A method according to claim 9 wherein the material comprises up to 100% wt/wt of said product, preferably up to 60% wt/wt, more preferably, up to 40% wt/wt.

11. A method according to any of claims 6 to 10 wherein the material may include an ethylene vinyl acetate polymer.

12. A method according to claim 11 wherein the ethylene vinyl acetate polymer is a co-polymer, the co-polymer including a vinyl acetate in an amount of 7 to 18% w/w of the co-polymer.

13. A method according to claim 11 or 12 wherein the material includes from 0 to 60% wt/wt of said ethylene vinyl acetate polymer, preferably 0 to 40% wt/wt.

14. A method according to any of claims 6 to 13 wherein silica is added to the plastics material.

15. A method according to claim 14 wherein the silica is added to the material in an amount of 1% to 5% wt/wt.

16. A method according to any of claims 6 to 15 wherein the rollers (122A to E) in the first heated draw roller assembly (122) are rotating such as to impart to the filament (116) a speed which may lie within the range up to - 200m per minute.

17. A method according to any of claims 6 to 16 wherein the temperature of the rollers (122A to E) in the first heated draw roller assembly (122) may lies within the range up 200°C.

18. A method according to any of claims 6 to 17 wherein the temperature in the heating zone (124) at the exit from the first draw roller assembly (122) lies within the range up to 200°C.

19. A method according to any of claims 6 to 18 wherein the second draw roller assembly (134) is heated to a temperature within the range up to 200°C.

20. A method according to any of claims 6 to 19 wherein the rollers (134A to E) of the second heated draw roller assembly (134) are rotating such as to impart to the filament (116) a speed which lies within the range up to 1000m per minute.

21. A method according to any of claims 6 to 15 wherein the filament (116) is passed through an intermediate draw roller assembly (128) arranged downstream of the first draw roller assembly (122) and upstream of the second draw roller assembly (134).

22. A method according to claim 21 wherein the extruded filament (116) is further heated in a second heating zone as the filament (116) exits the intermediate draw roller assembly (128) the filament remaining substantially unheated as it passes through the intermediate draw roller assembly.

23. A method according to any of claims 6 to 15, 21 and 22 wherein the rollers (122A to E) in the first draw.roller assembly are rotating such as to impart to the filament (116) a speed which may lie within the range of 16 - 50m per minute, conveniently substantially 32m per minute.

24. A method according to claim 23 wherein the first draw roller assembly (122) comprises a plurality of rollers (122 A to E).

25. A method according to claim 24 wherein the temperature of at least one of the rollers (122A to E) in the first draw roller assembly (122) lies in the range of 50 - 100°C.

26. A method according to claim 25 wherein the roller (122E) of the first draw roller assembly (122) arranged furthest downstream thereof is heated, and the roller (122D) immediately upstream of said furthest downstream roller is also heated.

27. A method according to any of claims 23 to 26 wherein the temperature of the first mentioned heating zone (124) at the exit from the first draw roller assembly (122) lies in the range of 100 - 135°C.

28. A method according to any of claims 21 to 26 wherein the temperature of the second heating zone (130) at the exit from the intermediate draw roller assembly (128) lies in the range of 100 - 150°C.

29. A method according to any of claims 21 to 27 wherein the intermediate draw roller assembly (128) comprises a plurality of rollers (128A to E).

30. A method according to claim 29 wherein the rollers (128A to E) in the intermediate draw roller assembly (128) are rotating such as to impart to the filament (116) a speed which lies in the range 150 - 250m per minute.

31. A method according to any of claims 6 to 15 and 21 to 29 wherein the second draw roller assembly (134) comprise a plurality of rollers (134A to E).

32. A method according to claim 31 wherein the rollers (134A to E) in the second draw roller assembly (134) are rotating such as to impart to the filament (116) a speed which may lie in the range 100 - 250m per minute.

33. A method according to claim 31 or 32 wherein the extruded filament (116) is cooled as it passes through the second draw roller assembly (134).

34. A method according to claim 33 wherein at least one of the rollers (134A to E) of the second draw roller assembly (134) is at a temperature in the range 5 - 15°C.

35. A method according to any of claims 31 to 34 wherein the roller (134E) of the second draw roller assembly (134) arranged furthest downstream thereof is cooled, and the roller (134D) immediately upstream of said furthest downstream roller (134E) is also cooled.

36. A method according to any of claims 6 to 15 and 21 to 35 wherein the filament (116) is extruded in a generally downward direction from the extruder (114), and the extruded filament (116) is cooled in a water bath (118) the temperature of the water in the bath (118) is controlled, the distance of the water bath (118) from the extruder (114) being adjustable to regulate the cross-section of the extruded filament (116).

37. A method according to claim 36 wherein the temperature of the melted granules lies in the range 200 - 300°C, and the extruder pressure lies within the range 600 - 1400psi, (41 - 97bar), the speed of the metering pump feeding the molten granules to the extrusion die being 1-18 revs per minute.

38. A method according- to claim 36 or 37 wherein when a dental floss is to be formed, the distance between the extrusion die (114) and the water level lies within the range 2 to 15mm, and the depth of the water within the cooling bath (118) lies within the range 0.1 to 50cm.

## Patentansprüche

1. Verfahren zum Umwandeln eines Kunststoffmaterials in eine Zahnseide, wobei das Kunststoffmaterial Polyethylen oder Polypropylen, eine Mischung aus Polyethylen und Polypropylen oder ein Copolymer aus Ethylen und Propylen umfasst, wobei das Verfahren ein Erhitzen des Kunststoffmaterials zum Zweck der Schmelzung, ein Ausbilden eines Fadens und im Anschluss daran das Abkühlen des Fadens umfasst, **dadurch gekennzeichnet, dass** der Schritt des Ausbildens des Fadens ein Durchlaufen des geschmolzenen Materials durch eine Extruderdüse (114) umfasst, um einen extrudierten Faden (116) zu bilden, wobei die Zahnseide den Faden bildet und der Faden eine Breite in einem Bereich von 0,5 mm bis 4 mm und ein Dezitex in einem Bereich von 500 bis 1500 aufweist.

2. Verfahren nach Anspruch 1, umfassend das Durchlaufen des extrudierten Fadens (116) durch eine Zugwalzenanordnung (122), wobei die Temperatur des Fadens (116) erhöht wird.

3. Verfahren nach Anspruch 2, wobei der Faden erhitzt wird, nachdem er die Zugwalzenanordnung (122) verlassen hat.

4. Verfahren nach Anspruch 1, umfassend das Durchlaufen des extrudierten Fadens (116) durch eine Mehrzahl von Zugwalzenanordnungen (122, 128, 134), wobei die Temperatur des Fadens (116) bei mindestens einer der Anordnungen erhöht ist.

5. Verfahren nach Anspruch 4, wobei der Faden (116) nach dem Verlassen mindestens einer der Zugwalzenanordnung erhitzt wird.

6. Verfahren zum Umwandeln eines Kunststoffmaterials in eine Zahnseide, wobei das Kunststoffmaterial Polyethylen oder Polypropylen, eine Mischung aus Polyethylen und Polypropylen oder ein Copolymer aus Ethylen und Propylen umfasst, wobei das Verfahren Erhitzen des Materials zum Zweck des Schmelzens, Bilden eines Fadens, Abkühlen des Fadens, Durchlaufen des Fadens durch eine erste Zugwalzenanordnung (122), wobei die Temperatur des Fadens (116) erhöht wird, Erhitzen des Fadens (116) in einem Erhitzungsbereich (124), wenn dieser aus der ersten Zugwalzenanordnung (122) kommt, und, danach, Durchlaufen des Fadens (116) durch eine zweite Zugwalzenanordnung (134), die mit einer unterschiedlichen linearen Geschwindigkeit arbeitet wie die erste Zugwalzenanordnung (122) und Aufspulen des Fadens (116), der die zweite Zugwalzenanordnung verlässt, umfasst, **gekennzeichnet dadurch, dass** der Schritt des Ausbildens des Fadens (116) ein Pumpen des geschmolzenen Kunststoffmaterials durch eine Extruderdüse (114) umfasst, um einen extrudierten Faden zu erzeugen, wobei die Zahnseide den Faden (116) bildet und der Faden eine Breite in einem Bereich von 0,6 mm bis 1,5 mm und ein Dezitex in einem Bereich von 500 bis 1500 aufweist.

7. Verfahren nach Anspruch 6, wobei das Kunststoffmaterial ein Copolymer aus Ethylen und Propylen umfasst, und das Material 0 bis 100% wt/wt (Gewichtsanteil) des besagten Copolymers umfasst, vorzugsweise 0 bis 60%, und noch bevorzugter 0 bis 40% des Copolymers.

8. Verfahren nach Anspruch 6 oder 7, wobei das Material PTFE in einer Menge von 5 bis 10% wt/wt (Gewichtsanteil) umfasst.

9. Verfahren nach einem der Ansprüche 6 bis 8, wobei das Material ein gummierendes Produkt umfasst, wobei dieses ein Polypropylenpolymer mit Äthen umfasst.

10. Verfahren nach Anspruch 9, wobei das Material bis zu 100% wt/wt (Gewichtsanteil) des besagten Produktes umfasst, vorzugsweise bis zu 60% wt/wt (Gewichtsanteil), und noch bevorzugter bis zu 40% wt/wt (Gewichtsanteil).

11. Verfahren nach einem der Ansprüche 6 bis 10, wobei das Material ein Ethylen-Vinyl-Acetat-Polymer umfasst.

12. Verfahren nach Anspruch 11, wobei das Ethylen-Vinyl-Acetat-Polymer ein Copolymer ist, wobei das Copolymer ein Vinyl-Azetat in einer Menge von 7 bis 18 % w/w des Copolymers umfasst.

13. Verfahren nach Anspruch 11 oder 12, wobei das Material 0 bis 60% wt/wt (Gewichtsanteil) des besagten Ethylen-Vinyl-Acetat-Polymeres umfasst, vorzugsweise 0 bis 40 % wt/wt (Gewichtsanteil).

14. Verfahren nach einem der Ansprüche 6 bis 13, wobei Silica (Kieselerde/-säure) zum Kunststoffmaterial hinzugegeben wird.

15. Verfahren nach Anspruch 14, wobei das Silica (Kieselerde) zu dem Material in einer Menge von 1 bis 5 % wt/wt (Gewichtsanteil) hinzugegeben wird.

16. Verfahren nach einem der Ansprüche 6 bis 15, wobei sich die Walzen (122A bis E) in der ersten beheizten Zugwalzenanordnung (122) drehen, so dass sie dem Faden (116) eine Geschwindigkeit vermitteln, die in einem Bereich von bis zu -200m pro Minute liegen kann.

17. Verfahren nach einem der Ansprüche 6 bis 16, wobei die Temperatur der Walzen (122A bis E) in der ersten beheizten Zugwalzenanordnung (122) in einem Bereich von bis zu 200 °C liegen kann.

18. Verfahren nach einem der Ansprüche 6 bis 17, wobei die Temperatur im Erhitzungsbereich (124) am Ende der ersten Zugwalzenanordnung (122) in dem Bereich von bis zu 200 °C liegt.

19. Verfahren nach einem der Ansprüche 6 bis 18, wobei die zweite Zugwalzenanordnung (134) auf eine Temperatur im Bereich bis zu 200 °C erhitzt wird.

20. Verfahren nach einem der Ansprüche 6 bis 19, wobei sich die Walzen (134A bis E) der zweiten beheizten Zugwalzenanordnung (134) so drehen, dass dem Faden (16) eine Geschwindigkeit in einem Bereich von bis zu 1000 m pro Minute vermittelt wird.

21. Verfahren nach einem der Ansprüche 6 bis 15, wobei der Faden (116) durch eine mittlere Zugwalzenanordnung (128) gezogen wird, welche stromabwärts hinter der ersten Zugwalzenanordnung (122) und stromaufwärts vor der zweiten Zugwalzenanordnung (134) angeordnet ist.

22. Verfahren nach Anspruch 21, wobei der extrudierte Faden (116) ferner in einem zweiten Erhitzungsbereich erhitzt wird, sobald der Faden (116) aus der mittleren Zugwalzenanordnung (128) kommt, wobei der Faden im Wesentlichen ohne Erhitzung bleibt, während er durch die mittlere Zugwalzenanordnung geführt wird.

23. Verfahren nach einem der Ansprüche 6 bis 15, 21 und 22, wobei sich die Walzen (122A bis E) in der ersten Zugwalzenanordnung so drehen, dass der Faden (116) einer Geschwindigkeit ausgesetzt ist, die in einem Bereich von 16 bis 50 m pro Minute liegt, herkömmlicherweise im Wesentlichen bei 32 m pro Minute.

24. Verfahren nach Anspruch 23, wobei die erste Zugwalzenanordnung (122) mehrere Walzen (122A bis E) umfasst.

25. Verfahren nach Anspruch 24, wobei die Temperatur von mindestens einer der Walzen (122A bis E) in der ersten Zugwalzenanordnung (122) in einem Bereich von 50 bis 100 °C liegt.

26. Verfahren nach Anspruch 25, wobei die Walze (122E) der ersten Zugwalzenanordnung (122), die am weitesten stromabwärts angeordnet ist, erhitzt wird, und die Walze (122D), die sich unmittelbar stromaufwärts bei der am weitesten stromabwärts liegenden Walze befindet, ebenso erhitzt wird.

27. Verfahren nach einem der Ansprüche 23 bis 26, wobei die Temperatur des ersten Erhitzungsbereiches (124) am Ende der ersten Zugwalzenanordnung (122) im Bereich von 100 bis 135 °C liegt.

28. Verfahren nach einem der Ansprüche 21 bis 26, wobei die Temperatur des zweiten Erhitzungsbereiches (130) am Ende der mittleren Zugwalzenanordnung (120) im Bereich von 100 bis 150 °C liegt.

29. Verfahren nach einem der Ansprüche 21 bis 27, wobei die mittlere Zugwalzenanordnung (128) eine Mehrzahl Walzen umfasst (128A bis E).

30. Verfahren nach Anspruch 29, wobei sich die Walzen (128A bis E) in der mittleren Zugwalzenanordnung (128) so drehen, dass sie dem Faden (116) eine Geschwindigkeit vermitteln, die im Bereich von 150 bis 250 m pro Minute liegt.

31. Verfahren nach einem der Ansprüche 6 bis 15 und 21 bis 29, wobei die zweite Anordnung mit Walzen (134) eine Mehrzahl von Walzen (134A bis E) umfasst.

32. Verfahren nach Anspruch 31, wobei sich die Walzen (134A bis E) in der zweiten Anordnung mit Walzen (134) so drehen, dass sie dem Faden (116) eine Geschwindigkeit vermitteln, die im Bereich von 100 bis 250 m pro Minute liegt.

33. Verfahren nach Anspruch 31 oder 32, wobei der extrudierte Faden (116) während des Durchlaufens der zweiten Zugwalzenanordnung (134) abgekühlt wird.

34. Verfahren nach Anspruch 33, wobei mindestens eine der Walzen (134A bis E) der zweiten Zugwalzenanordnung (134) eine Temperatur in einem Bereich von 5 bis 15 °C aufweist.

35. Verfahren nach einem der Ansprüche 31 bis 34, wobei die Walze (134E) der zweiten Zugwalzenanordnung (134), die davon am weitesten stromabwärts liegt, gekühlt ist, und die Walze (134D), die sich direkt stromaufwärts vor der weitesten stromabwärts liegenden Walze (134E) befindet, ebenfalls abgekühlt wird.

36. Verfahren nach einem der Ansprüche 6 bis 15 und 21 bis 35, wobei der Faden (116) in einer im Allgemeinen abwärts zeigenden Richtung aus dem Extruder (114) gepresst wird, und der extrudierte Faden (116) in einem Wasserbad (118) abgekühlt wird, wobei die Temperatur des Wassers in dem Bad (118) kontrolliert wird, wobei der Abstand vom Wasserbad (118) zum Extruder (114) einstellbar ist, um den Querschnitt des extrudierten Fadens (116) zu regulieren.

37. Verfahren nach Anspruch 36, wobei die Temperatur der geschmolzenen Granulate in einem Bereich von 200 bis 300 °C liegt, und der Druck des Extruders innerhalb eines Bereiches von 600 bis 1400 psi (41 bis 97 bar) liegt, wobei die Geschwindigkeit der Dosierpumpe, die die geschmolzenen Granulate in die Extruderdüse führt, bei 1 bis 18 Umdrehungen pro Minute liegt.

38. Verfahren nach Anspruch 36 oder 37, wobei beim Ausbilden einer Zahnseide der Abstand zwischen der Extruderdüse (114) und dem Wasserniveau innerhalb eines Bereichs von 2 bis 15 mm liegt, und die Tiefe des Wassers im Kühlbad (118) in einem Bereich von 0,1 bis 50 cm liegt.

## Revendications

1. Procédé de conversion d'un matériau plastique en un fil dentaire, ledit matériau plastique comprenant du polyéthylène ou du polypropylène, un mélange de polyéthylène et de polypropylène ou un copolymère d'éthylène et de propylène, le procédé comprenant le chauffage du matériau plastique pour le fondre, la formation d'un filament et ensuite le refroidissement du filament, **caractérisé en ce que** l'étape de formation du filament comprend le passage du matériau fondu dans une filière d'extrusion (114) pour former un filament extrudé (116), où le fil dentaire constitue le filament et le filament a une largeur dans une plage de 0,5 mm à 4 mm et un decitex dans la plage de 500 à 1500.

2. Procédé selon la revendication 1, comprenant le passage du filament extrudé (116) dans un assemblage à rouleaux d'étirement (122) tout en élevant la température du filament (116).

3. Procédé selon la revendication 2, où le filament est chauffé après être sorti de l'assemblage à rouleaux d'étirement (122).

4. Procédé selon la revendication 1, comprenant le passage du filament extrudé (116) dans une pluralité d'assemblages à rouleaux d'étirement (122, 128. 134), la température du filament (116) étant élevée au niveau d'au moins un des assemblages.

5. Procédé selon la revendication 4, où le filament (116) est chauffé après être sorti d'au moins l'un des assemblages à rouleaux d'étirement.

6. Procédé de conversion d'un matériau plastique en un fil dentaire, ledit matériau plastique comprenant du polyéthylène ou du polypropylène, un mélange de polyéthylène et de polypropylène ou un copolymère d'éthylène et de propylène, le procédé comprenant le chauffage du matériau plastique pour le fondre, la formation d'un filament, le refroidissement du filament, le passage du filament dans un premier assemblage à rouleaux d'étirement (122) tout en élevant la température du filament (116), le chauffage du filament (116) dans une zone de chauffage (124) dès qu'il sort du premier assemblage à rouleaux d'étirement (122) et ensuite, le passage du filament (116) dans un deuxième assemblage à rouleaux d'étirement (134) fonctionnant à une vitesse linéaire différente du premier assemblage à rouleaux d'étirement (122) et le bobinage du filament (116) sortant du deuxième assemblage à rouleaux d'étirement, **caractérisé en ce que** l'étape de formation du filament (116) comprend le pompage du matériau plastique fondu à travers une filière d'extrusion (114) pour former un filament extrudé, où le fil dentaire constitue le filament (116) et le filament a une largeur dans la plage de 0,6 mm à 1,5 mm et un decitex dans la plage de 500 à 1500.

7. Procédé selon la revendication 6, où le matériau plastique comprend un copolymère d'éthylène et de propylène et le matériau comprend de 0 à 100 % en poids/poids dudit copolymère, de préférence de 0 à 60 %, et plus préférentiellement de 0 à 40 % dudit copolymère.

8. Procédé selon la revendication 6 ou 7, où le matériau comprend du PTFE en une quantité de 5 à 10 % en poids/poids.

9. Procédé selon l'une quelconque des revendications 6 à 8, où le matériau comprend un produit de caoutchoutage, comprenant un polymère de propylène avec de l'éthène.

10. Procédé selon la revendication 9, où le matériau comprend jusqu'à 100 % en poids/poids dudit produit, de préférence jusq'à 60 % en poids/poids, plus préférentiellement jusqu'à 40 % en poids/poids.

11. Procédé selon l'une quelconque des revendications 6 à 10, où le matériau peut comprendre un polymère d'éthylène - acétate de vinyle.

12. Procédé selon la revendication 11 où le polymère d'éthylène - acétate de vinyle est un copolymère, le copolymère comprenant un acétate de vinyle en une quantité de 7 à 18 % en poids/poids du copolymère.

13. Procédé selon la revendication 11 ou 12, où le matériau comprend de 0 à 60 % en poids/poids dudit polymère d'éthylène - acétate de vinyle, de préférence de 0 à 40 % en poids/poids.

14. Procédé selon l'une quelconque des revendications 6 à 13, où de la silice est ajoutée au matériau plastique.

15. Procédé selon la revendication 14 où la silice est ajoutée au matériau en une quantité de 1 % à 5 % en poids/poids.

16. Procédé selon l'une quelconque des revendications 6 à 15, où les rouleaux (122A à E) dans le premier assemblage à rouleaux d'étirement chauffé (122) tournent de manière à conférer au filament (116) une vitesse qui peut se situer dans la plage allant jusqu'à 200 m par minute.

17. Procédé selon l'une quelconque des revendications 6 à 16, où la température des rouleaux (122A à E) dans le premier assemblage à rouleaux d'étirement chauffé (122) peut se situer dans la plage allant jusqu'à 200°C.

18. Procédé selon l'une quelconque des revendications 6 à 17, où la température dans la zone de chauffage (124) à la sortie du premier assemblage à rouleaux d'étirement (122) se situe dans la plage allant jusqu'à 200°C.

19. Procédé selon l'une quelconque des revendications 6 à 18, où le deuxième assemblage à rouleaux d'étirement (134) est chauffé à une température dans la plage allant jusqu'à 200°C.

20. Procédé selon l'une quelconque des revendications 6 à 19, où les rouleaux (134A à E) du deuxième assemblage à rouleaux d'étirement chauffé (134) tournent de manière à conférer au filament (116) une vitesse qui se situe dans la plage allant jusqu'à 1000 m par minute.

21. Procédé selon l'une quelconque des revendications 6 à 15, où le filament (116) est passé à travers un assemblage à rouleaux d'étirement intermédiaire (128) disposé en aval du premier assemblage à rouleaux d'étirement (122) et en amont du deuxième assemblage à rouleaux d'étirement (134).

22. Procédé selon la revendication 21, où le filament extrudé (116) est encore chauffé dans une deuxième zone de chauffage dès que le filament (116) sort de l'assemblage à rouleaux d'étirement intermédiaire (128), le filament restant sensiblement non chauffé quand il passe à travers l'assemblage à rouleaux d'étirement intermédiaire.

23. Procédé selon l'une quelconque des revendications 6 à 15, 21 et 22, où les rouleaux (122A à E) dans le premier assemblage à rouleaux d'étirement tournent de manière à conférer au filament (116) une vitesse qui peut se situer dans la plage de 16 à 50 m par minute, sensiblement adéquatement de 32 m par minute.

24. Procédé selon la revendication 23, où le premier assemblage à rouleaux d'étirement (122) comprend une pluralité de rouleaux (122A à E).

25. Procédé selon la revendication 24, où la température d'au moins un des rouleaux (122A à E) dans le premier assemblage à rouleaux d'étirement (122) se situe dans la plage de 50 à 100°C.

26. Procédé selon la revendication 25, où le rouleau (122 E) du premier assemblage à rouleaux d'étirement (122) disposé le plus en aval de celui-ci est chauffé, et le rouleau (122D) immédiatement en amont dudit rouleau le plus en aval est aussi chauffé.

27. Procédé selon l'une quelconque des revendications 23 à 26, où la température de la première zone de chauffage mentionnée (124) à la sortie du premier assemblage à rouleaux d'étirement (122) se situe dans la plage de 100 à 135°C.

28. Procédé selon l'une quelconque des revendications 21 à 26, où la température de la deuxième zone de chauffage (130) à la sortie de l'assemblage à rouleaux d'étirement intermédiaire (128) se situe dans la plage de 100 à 150°C

29. Procédé selon l'une quelconque des revendications 21 à 27, où l'assemblage à rouleaux d'étirement intermédiaire (128) comprend une pluralité de rouleaux (128A à E).

30. Procédé selon la revendication 29, où les rouleaux (128A à E) dans l'assemblage à rouleaux d'étirement intermédiaire (128) tournent de manière à conférer au filament (116) une vitesse qui se situe dans la plage de 150 à 250 m par minute.

31. Procédé selon l'une quelconque des revendications 6 à 15 et 21 à 29, où le deuxième assemblage à rouleaux d'étirement (134) comprend une pluralité de rouleaux (134A à E).

32. Procédé selon la revendication 31 où les rouleaux (134A à E) dans le deuxième assemblage à rouleaux d'étirement (134) tournent de manière à conférer au filament (116) une vitesse qui peut se situer dans la plage de 100 à 250 m par minute.

33. Procédé selon la revendication 31 ou 32, où le filament extrudé (116) est refroidi lorsqu'il passe dans le deuxième assemblage à rouleaux d'étirement (134).

34. Procédé selon la revendication 33, où au moins un des rouleaux (134A à E) du deuxième assemblage à rouleaux d'étirement (134) est à une température dans la plage de 5 à 15°C.

35. Procédé selon l'une quelconque des revendications 31 à 34, où le rouleau (134E) du deuxième assemblage à rouleaux d'étirement (134) disposé le plus en aval de celui-ci est refroidi, et le rouleau (134D) immédiatement en amont dudit rouleau le plus en aval (134 E) est aussi refroidi.

36. Procédé selon l'une quelconque des revendications 6 à 15 et 21 à 35, où le filament (116) est extrudé dans une direction allant généralement vers le bas depuis l'extrudeuse (114) et le filament extrudé (116) est refroidi dans un bain d'eau (118), la température de l'eau dans le bain (118) étant contrôlée, la distance entre le bain d'eau (118) et l'extrudeuse (114) étant ajustable afin de réguler la section transversale du filament extrudé (116).

37. Procédé selon la revendication 36, où la température des granulés fondus se situe dans la plage de 200 à 300°C, et la pression de l'extrudeuse se situe dans la plage de 600 à 1400 psi, (41 à 97 bars), la vitesse de la pompe de dosage alimentant les granulés fondus à la filière d'extrusion étant de 1 à 18 tours par minute.

38. Procédé selon la revendication 36 ou 37, où, lorsqu'un fil dentaire doit être formé, la distance entre la filière d'extrusion (114) et le niveau d'eau se situant dans la plage de 2 à 15 mm et la profondeur de l'eau dans le bain de refroidissement (118) se situant dans la plage de 0,1 à 50 cm.
